# EUROPEAN PATENT APPLICATION

(11) **EP 1 219 331 A2**
(43) Date of publication of application: **03.07.2002**
(21) Application number: 01310667.9
(22) Date of filing: 20.12.2001
(51) Int. Cl.: A63F 13/10

(54) **Object display**

(30) Priority: 22.12.2000 JP 2000389856; 15.11.2001 JP 2001349841
(71) Applicant: Sony Computer Entertainment Inc., Tokyo 107-0052 (JP)
(72) Inventor: Nishizawa, Manabu, Sony Entertainment Inc., Minato-ku, Tokyo 107-0052 (JP); Wakimura, Takayuki, Sony Entertainment Inc., Minato-ku, Tokyo 107-0052 (JP); Sato, Fumiteru, Sony Entertainment Inc., Minato-ku, Tokyo 107-0052 (JP)
(74) Representative: Turner, James Arthur

(57) **Abstract**

On the occasion that predetermined voices are recognized, parameters regarding objects are changed appropriately depending on the voice thus recognized, and the objects is displayed on the basis of the changed parameters. For that reason, it is possible to control to display smoothly a battle scene while fastening smoothly an attack and protection and so forth between the character of the leading character and the character of the enemy.

## Description

The present invention relates to an object display method, an object display program to be executed on a computer, a computer-readable recording medium having recorded therein an object display program to be executed on a computer, a program execution apparatus for executing an object display program, all of which are suitable for, for instance, a video game unit, an entertainment apparatus with video game function and so forth.

Nowadays, a video game unit for executing a video game on the basis of a game program of being recorded in recording medium, such as CD-ROM, DVD-ROM semiconductor memory or so forth is in widespread use.

In this video game unit, a character of being displayed on a display screen is made to manipulate in such a way as to manipulate a controller connected to a video game unit body, thus it is possible to take enjoyment in various video games such as for instance, RPG (roll playing game), AVG (adventure game), SLG (simulation game), and so forth.

However, in a conventional video game unit, to manipulate almost exclusively on the controller is the only surest way to manipulate the character. For that reason, the player becomes to manipulate only the controller sedulously during the game, thus it wasn't quite enjoyment enough in terms of enjoyment of manipulating the character.

Various respective aspects and features of the invention are defined in the appended claims. Features from the dependent claims may be combined with features of the independent claims as appropriate and not merely as explicitly set out in the claims.

The present invention has been made in consideration of the above-mentioned problem, and embodiments of the present invention can provide an object display method, an object display program to be executed on a computer, a computer-readable recording medium having recorded therein an object display program to be executed on a computer, a program execution apparatus for executing an object display program, all of which can be made to enhance sauce of the video game and/or enjoyment of manipulating the character.

The present invention, on the occasion that operations of the objects are made to control to be displayed, selects any one of a selection table from among a plurality of the selection tables of having a plurality of event information that indicate operations of the objects, and controls to display the objects so as to conduct the operations corresponding to the event information thus selected. The present invention controls to display the objects so as to conduct the operations of fastening to be configured respective information by executing repeatedly such selection operations of the selection table and the event information.

For that reason, it is possible to control to display the operations of the objects while fastening the event operations of the objects in real time, thus it is possible to permit continuous and smooth action-display of the objects.

In addition, the present invention, on the occasion that predetermined voices are recognized, changes appropriately parameters regarding objects depending on the voice thus recognized, and controls to display the objects on the basis of the changed parameters. For that reason, for instance, it is possible to manipulate the objects by using a voice together with a manipulation unit of controller and so forth, thus it is possible to resolve the aforementioned problems.

Other and further features of the present invention will become obvious upon understanding of the illustrative embodiments about to be described in connection with the accompanying drawings or will be indicated in the appended claims, and various advantages not referred to herein will occur to one skilled in the art upon employing of the invention in practice.

The invention will now be described by way of example with reference to the accompanying drawings, throughout which like parts are referred to by like references, and in which:
FIG. 1 is a block diagram of principal part of a video game unit of an embodiment to which the present invention is applied;
FIG. 2 is a perspective view of a controller connected to the video game unit of the embodiment;
FIG. 3 is a perspective view of a head set for gathering together a voice vocalized from a player;
FIG. 4 is a view illustrating one example of a display screen formed by the video game unit of the embodiment;
FIG. 5 is a view for explaining a parameter for controlling to display operations of a leading character of the video game being conducted at the video game unit of the embodiment;
FIG. 6 is a view for explaining a parameter for controlling to display operations of an enemy character of the video game being conducted at the video game unit of the embodiment;
FIG. 7 is a view for explaining a parameter of arms of being possessed by the leading character of the video game being conducted at the video game unit of the embodiment;
FIG. 8 is a flowchart for explaining flow of motion until the leading character comes across the enemy character in the video game unit of the embodiment;
FIG. 9 is a view illustrating one example of values of respective parameters in cases where the leading character travels along predetermined route with normal psychology;
FIG. 10 is a view illustrating one example of values of respective parameters in cases where the leading character comes across the enemy character;
FIG. 11 is a view illustrating one example of values of respective parameters in cases where the leading character runs away from the enemy character;
FIG. 12 is a flowchart for explaining battle operation between the leading character and the enemy character;
FIG. 13 is a view for explaining event operation of the leading character at the time of the battle;
FIG. 14 is a view for explaining event operation of the enemy character at the time of the battle;
FIG. 15 is a view for explaining item change operation of the leading character at the time of the battle;
FIG. 16 is a view illustrating condition of manipulating the leading character by the player using voice input; and
FIG. 17 is a view illustrating one example of a display screen in which the leading character of taking a step in accordance with voice input of the player in order to give attack to the enemy character.

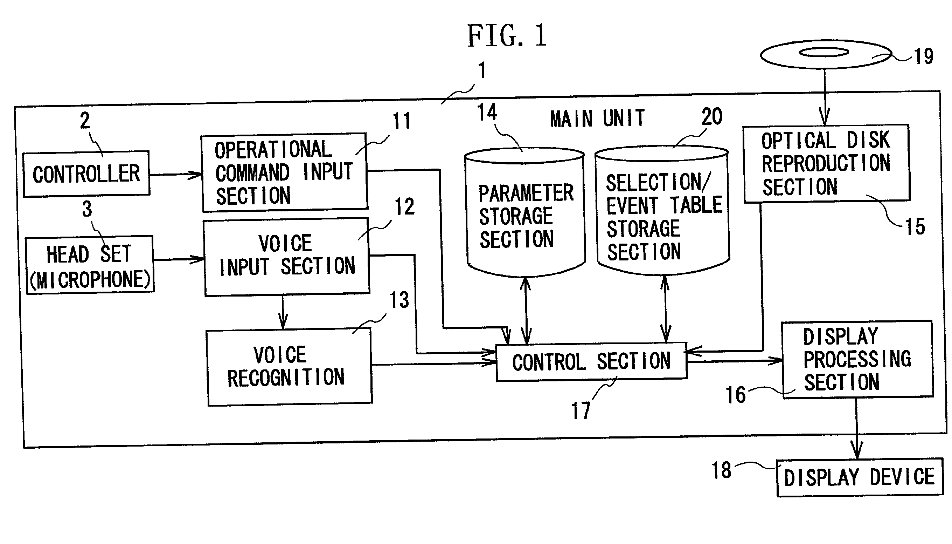

The present invention is applicable to the video game unit as illustrated in FIG. 1.

### General Configuration of Video Game Unit

The video game unit illustrated in this FIG. 1 has, for instance, an main unit **1** for executing the video game of battle type explained below, a controller **2** of being manipulated by a player, and a head set **3** into which a speaker device for producing sound such as effective sound of the video game and so forth and a microphone device for gathering together a voice of the player are integrated.

The main unit **1** has an operational command input section **11** to which the manipulating command from the controller **2** of being operated by the player is supplied, a voice input section **12** to which a voice signal corresponding to a voice of the player gathered together by the microphone device of the head set **3** is supplied, and a voice recognition section **13** for recognizing meaning of the voice vocalized by the player on the basis of a voice signal from the voice input section **12**.

In addition, the main unit **1** further comprises a parameter storage section **14** for storing therein a parameter such as the number of enemies read out from the optical disk **19**, apparent fearfulness, distance between the leading character and the enemy character and so forth, a selection/event table storage section **20** for storing therein a plurality of selection table consisting of an event table made up of a plurality of events of indicating operations of the leading character and the enemy character and a plurality of event tables of being classified in every respective categories, an optical disk regeneration section **15** for reading out the parameter, game program and so forth from the loaded optical disk **19**, a display processing section **16** for controlling to display a game screen to the display device **18**, and a control section **17** for controlling the whole of the video game unit.

### Configuration of Controller

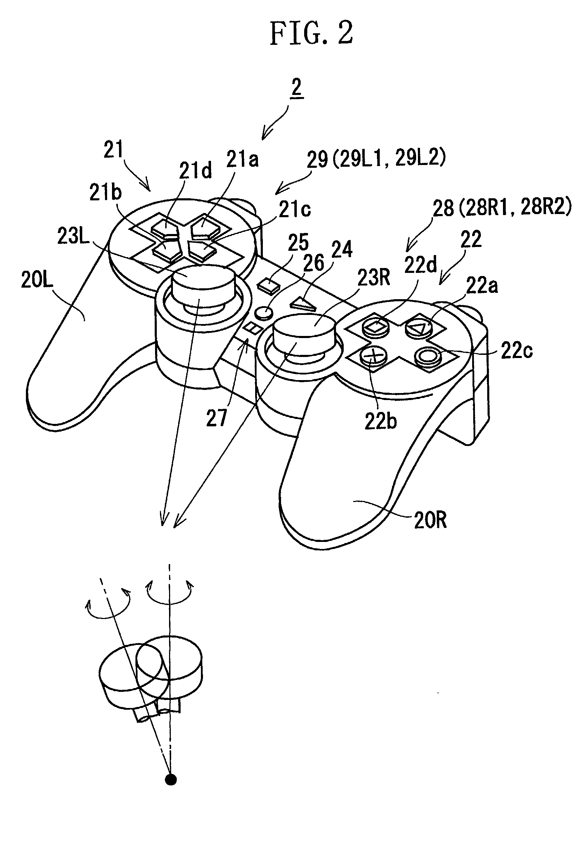

FIG. 2 indicates appearance of the controller **2.** As is clear from FIG. 2, the controller **2** has two grippers **20R, 20L,** the player holds the controller **2** by gripping the respective grippers **20R**, **20L** using right-and-left defensive power.

The controller 2, in the condition that the player holds each gripper **20R**, **20L** by using right-and-left defensive power, is provided with first, and second manipulating section **21**, **22** and analog manipulating sections **23R**, **23**L at positions capable of being operated with player's respective thumbs.

The first manipulating section **21** is one for conducting instruction of direction of character's movement. The first manipulating section **21** is provided with an upward instructing button **21a** for instructing upward, a downward instructing button **21b** for instructing downward, a rightward instructing button **21c** for instructing rightward, and a leftward instructing button **21d** for instructing leftward respectively.

The second manipulating section **22** is provided with a Δ-button **22a** incused Δ shaped punch mark, a ×-button **22b** incused × shaped punch mark, a ○-button **22c** incused ○ shaped punch mark, and a □-button **22d** incused □ shaped punch mark.

The analog manipulating sections **23R**, **23L** are maintained in connection with its position under standing condition (no tilt condition = reference position) at the time of no tilt operation. When the user conducts tilt operation in connection with the analog manipulating section **23R**, **23L** while conducting press manipulation the analog manipulating section **23R**, **23L**, coordinate values on XY-coordinates depending on tilt amount and tilt direction to the above reference position are detected, then the coordinate values are supplied to the main unit **1** via a controller connecting section as manipulating output.

The controller **2** is provided with a start button **24** for conducting specification of game start and so forth, a selection button **25** for conducting selection of predetermined item and so forth, and a mode selection switch **26** for selecting analog mode or digital mode. When the analog mode is selected by the mode selection switch **26**, light-emitting diode **27** (LED) is made light emission control and the analog manipulating section **23R**, **23L** becomes operational state, while when digital mode is selected, the light-emitting diode **27** is made optical quenching control and the analog manipulating section **23R**, **23L** becomes un-operational state.

The controller **2** is provided with a right button **28** and a left button **29** at positions capable of being operated by using a first finger (or a second finger) of each hand in the condition that each gripper **20R, 20L** is made to hold by using right hand and left hand. Each button **28, 29** has first and second right button **28R1, 28R2,** and first and second left button **29L1, 29L2** all of which are provided in parallel to thickness direction of the controller **2.**

The player inputs manipulating command of the video game unit and the character while manipulating respective buttons.

### Configuration of Headset

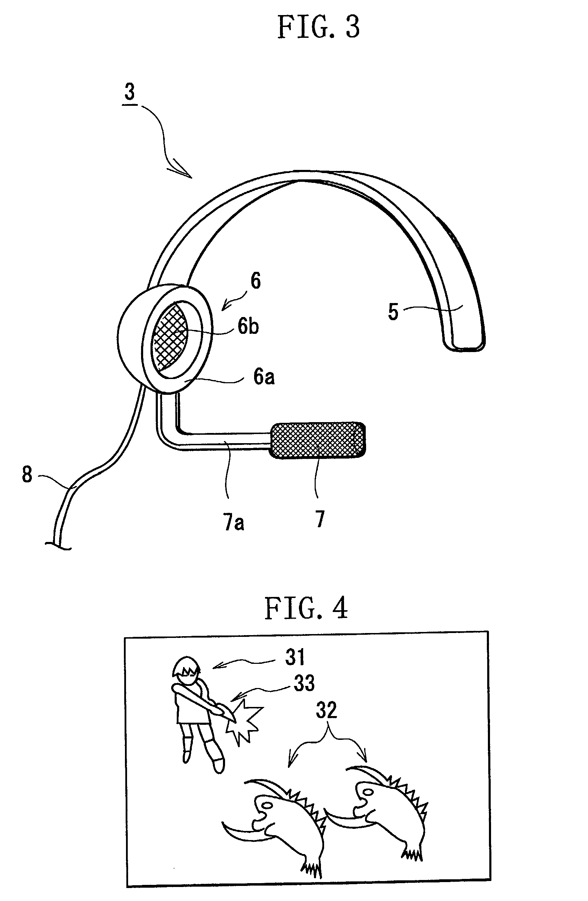

The headset **3** is one ear specification as indicated in FIG. 3, and the headset **3** has a fixing arm **5** for fixing the headset **3** to the player's head, a sound production section **6** provided at one end of the fixing arm **5**, and a microphone **7**.

The fixing arm **5** has curved shape along with head shape of mankind, and the headset **3** is made to fix on the head of the player in such a way that when the headset **3** is mounted on the head of the player, temporal region of head of the player is made to put between both end sections of the fixing arm **5** lightly.

The sound production section **6** has a pad section **6a** that takes a shape for covering wholly the player's right ear (or left ear) when the headset **3** is fixed to the head of the player, and a speaker device **6b** for producing sound of effective sound of the video game and so forth. The pad section **6a** is formed with soft material such as sponge and so forth so that ear of the player does not become pain even though the headset **3** is made to mount on the head during long time.

The microphone **7** is provided at another end side of a microphone arm **7a** whose one end side is connected to the above sound production section **6.** The microphone **7** positions in close vicinity to a mouse of the player on the occasion that the headset **3** is made to mount on the head of the player, and gathers together voices vocalized by the player, thus voice signals corresponding to the gathered voices are made to supply to a voice input section **12** of the main unit 1 via a cable **8.**

In this example, explanation will be made to advance as the headset **3** is one ear specification, however, it may be suitable that the headset is both ears specification such as headphone device. In addition, it may be suitable that inner type earphone is used as the sound production section. It is possible to plan of miniaturization of headset and weight saving of headset in such a way that the headset is made to constitute by using this earphone.

Further, the headset **3** is fixed to the head of the player by using fixing arm **5**, however, it is also suitable that there will be provided a hook for hooking on one ear of the player instead of the fixing arm **5**, then the headset is made to fix on one ear side of the player by using this hook.

### Execution operation of Video Game

Next, execution operation of the video game of battle type in the video game unit of the embodiment will be explained.

The video game of the battle type is one in which the leading character moves from start to goal therebetween along predetermined route, and the leading character comes across the enemy character during this movement. For that reason, the player manipulates the controller **2**, as well as the player vocalizes a voice to the leading character within the display screen via the microphone **7** of the headset **3** to encourage the leading character, or the player causes the leading character to battle the enemy character while instructing battle procedure. And then, the game is one, by this battle, in which the leading character sets his sight on goal while bringing the enemy character down into the dust.

In cases where the video game of the battle type is made to conduct, the player loads the optical disk **19** in which game program of the video game of the battle type is recorded to the main unit **1**, followed by specifying game start while operating the start button **24** of the controller **2**. According to this specification, the manipulating command of specifying this game start is supplied to the control section **17** via the operational command input section **11**, then the optical disk reproduction section **15** is controlled by the control section **17**, thus reproductions are made to conduct, such as the game program, the leading character, the enemy character, and respective parameters of arms that the leading character possesses, all of which are recorded in the optical disk **19**, further a plurality of event tables in which a plurality of events are indicated in a table, which event indicates action of the leading character and the enemy character, and a plurality of selection table consisting of a plurality of event tables classified in every respective categories and so forth recorded in the optical disk **19**.

The control section **17** causes respective parameters reproduced by the optical disk reproduction section **15** to be controlled to store in the storage section **14** and causes respective selection tables and respective event tables to be controlled to store in the selection/event table storage section **20**.

In addition, the control section **17** forms game screens of this battle type video game on the basis of the game program reproduced by the optical disk reproduction section **15** and manipulation of the controller **2** by the player, and then the control section **17** causes formed game screens to be controlled to display on a display device **18** via a display processing section **16**.

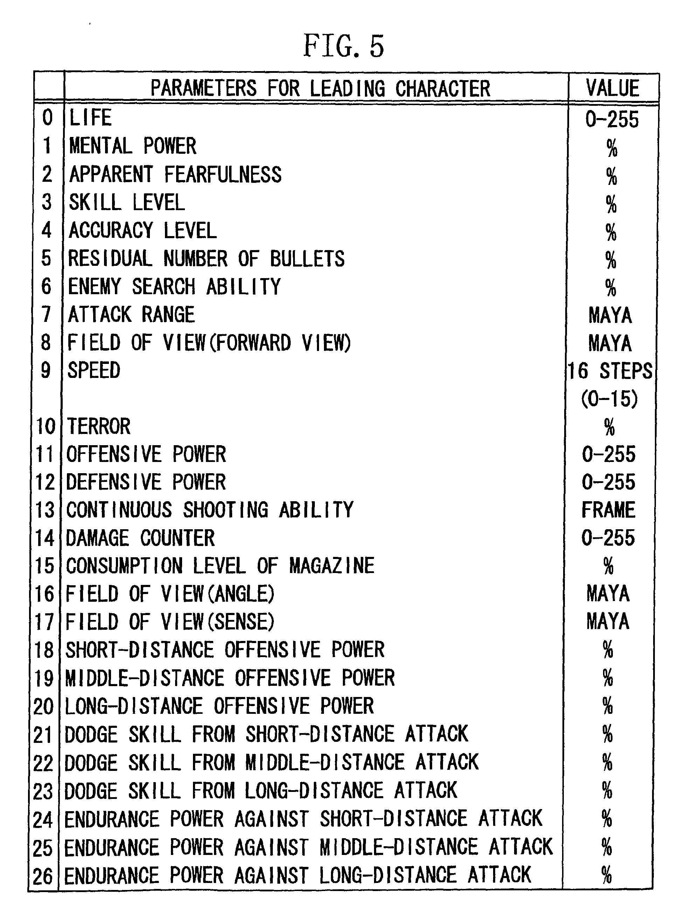

FIG. 4 indicates one example of this game screen. The game screen of this FIG. 4 is one in which the leading character **31** comes across the enemy character **32** in the course of movement of the movement route, a scene is made to indicate in which the leading character **31** has a arms **3**3 such as for instance a laser rifle at the ready against to the enemy character **32.**

### Parameter

Parameter of changing in real time is set to the leading character **31**, the enemy character **32**and the arms **33** being used by the leading character **31** respectively.

### Leading character Parameter

Specifically, first of all, FIG. 5 indicates parameters that are prepared for the leading character **31**, in which following items are set, such as for instance, life force (life), mental power, apparent fearfulness, skill level, accuracy level, the residual number of bullets of possessive arms **33**, enemy search ability, attack range, field of view (forward view), speed of motion (speed), terror, offensive power, defensive power, continuous shooting ability of arms **33**, the number of damage (damage counter), consumption level of magazine of arms **33** (consumption level of magazine) , field of view (angle), field of view (sense), short-distance offensive power, middle-distance offensive power, long-distance offensive power, power for overbearing the enemy's attack from short distance (dodge skill), power for overbearing the enemy's attack from middle distance, power for overbearing the enemy's attack from long distance, durability to the enemy's attack of short distance (endurance power), durability to the enemy's attack of middle distance, durability to the enemy's attack of long distance, and so forth.

The life force, offensive power, defensive power and the number of damage among them are expressed by using values of 0 to 255, and the values decrease gradually depending on the damage of suffering from the enemy. In addition, the speed of motion (speed) is expressed with total 16 gradations of 0 to 15. Further, the mental power to the enemy search ability, the terror, the consumption level of magazine, and the offensive power at short distance to the durability to the enemy attack of long distance are expressed with percentage (%).

The continuous shooting ability is expressed by using the number of frame (FRAME) of conducting automatic fire depiction, and the attack range, the field of view(forward view), the field of view (angle) and field of view (sense) are expressed by using unit of "maya" respectively.

### Enemy Character Parameter

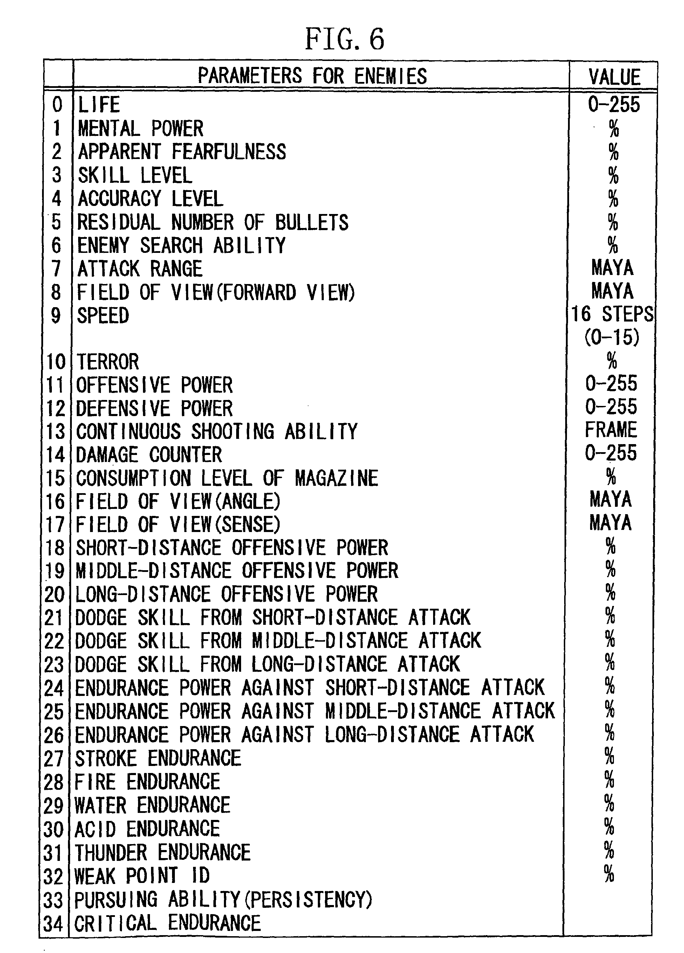

Next, FIG. 6 indicates parameters that are prepared for the enemy character **32**, in which following items are set, such as for instance, life force (life), mental power, apparent fearfulness, skill level, accuracy level, the residual number of bullets of possessive arms, enemy search ability, attack range, field of view (forward view), speed of motion (speed), terror, offensive power, defensive power, continuous shooting ability of arms, the number of damage (damage counter), consumption level of magazine of arms (consumption level of magazine), field of view (angle), field of view (sense), short-distance offensive power, middle-distance offensive power, long-distance offensive power, power for overbearing the leading character's attack from short distance (dodge skill), power for overbearing the leading character's attack from middle distance, power for overbearing the leading character's attack from long distance, durability to the leading character's attack of short distance (endurance power), durability to the leading character's attack of middle distance, durability to the leading character's attack of long distance, and so forth.

In addition, as parameters of being possessed by the enemy character **32**, following items are set, in which the items are durability against stroke attack from the leading character (STROKE endurance), durability against flame projecting attack from the leading character (FIRE endurance), durability against water projecting attack (WATER endurance), durability against acid projecting attack (ACID endurance), weak point ID, competence of continuing to trace the leading character (persistency) and critical endurance and so forth.

The life force, offensive power, defensive power and the number of damage among them are expressed by using values of 0 to 255, and the values decrease gradually depending on the damage of suffering from the leading character. In addition, the speed of motion (speed) is expressed with total 16 gradations of 0 to 15. Further, the mental power to the enemy search ability, the terror, the consumption level of magazine, and the offensive power at short distance to the durability to the enemy attack of long distance are expressed with percentage (%).

The continuous shooting ability is expressed by using the number of frame (FRAME) of conducting automatic fire depiction, and the attack range, the field of view direction (forward view), the field of view (angle) and field of view (sense) are expressed by using unit of "maya" respectively.

### Arms Parameter

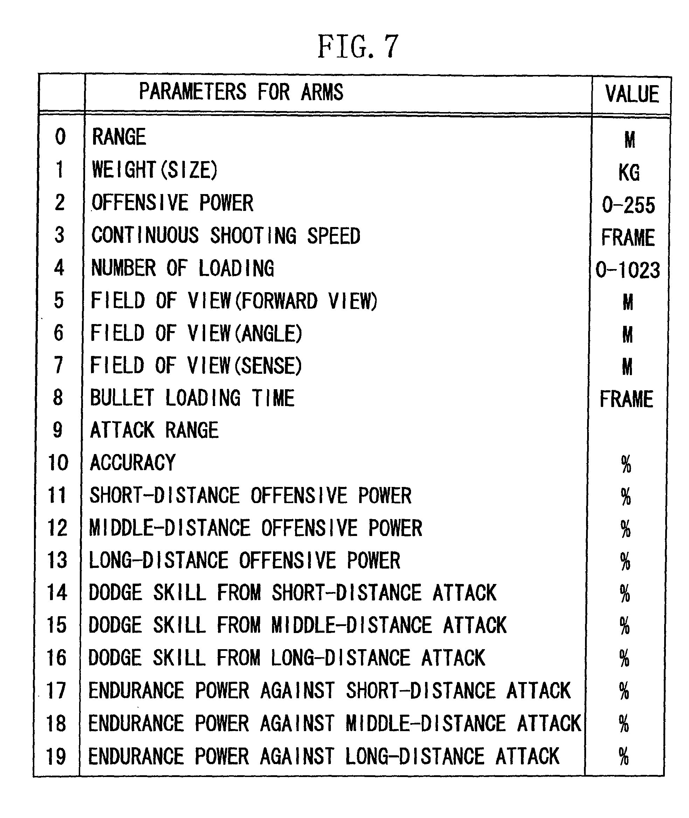

Next, FIG. 7 indicates parameters of the arms **33** of being possessed by the leading character, in which following items are set, such as for instance, range, weight (size), offensive power, continuous shooting speed, the number of loading, field of view (forward view), field of view (angle), field of view (sense), bullet loading time, attack range, accuracy, short-distance offensive power, middle-distance offensive power, long-distance offensive power, power for overbearing the enemy's attack from short distance (dodge skill), power for overbearing the enemy's attack from middle distance, power for overbearing the enemy's attack from long distance, durability to the enemy's attack of short distance (endurance power), durability to the enemy's attack of middle distance, durability to the enemy's attack of long distance, and so forth.

The range, the field of view (forward view), the field of view (angle) and the field of view (sense) among them are expressed with meter (M), and the offensive power is expressed by using values of 0 to 255. In addition, the weight is expressed by kilo gram (Kg), the number of loading is expressed by numeral values of 0 to 1023, the continuous shooting speed and the bullet loading time are expressed by the number of frames of conducting depiction (FRAME). Further, the accuracy to the durability to the enemy attack of long distance are expressed by percentage (%) respectively.

### Display control depending on Parameter

Such respective parameters are read out from the optical disk as described above, followed by being stored in a parameter storage section **14** indicated in FIG. 1, and a control section **17** reads out appropriately the parameter from the parameter storage section **14** depending on scene or conditions or so forth, in which display control of the leading character **31,** the enemy character **32,** operations of the arms **33** and so forth are conducted.

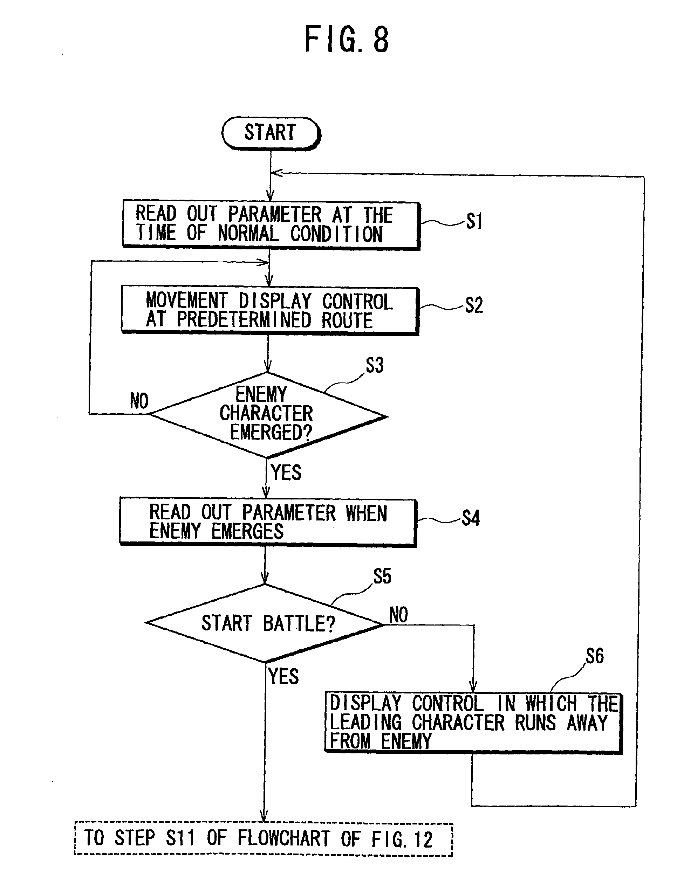

Flow of the display control on the basis of the parameter will be explained using flowchart of FIG. 8 below. The flowchart starts due to start of the video game depending on the main unit **1**, operation of the control section **17** proceeds to STEP S1.

In STEP S1, the control section **17** reads out parameter of the leading character **31** at the time of normal state from among respective parameters stored in the parameter storage section **14,** and in STEP S2, the leading character **31** is made to move while conducting display control along the predetermined route under the state of mind depending on the parameter at the time of normal state.

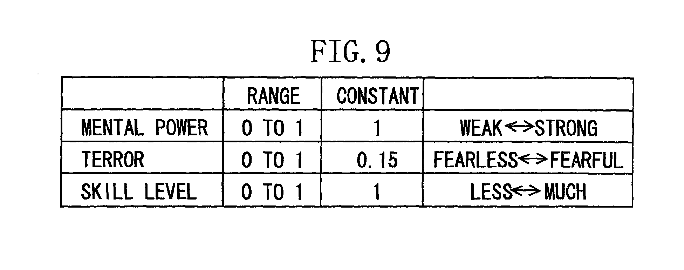

Respective parameters of the mental power, such as the terror, the skill level and so forth as indicated in FIG. 9 are read out from the parameter storage section **14** as the parameter of the leading character read out at the time of normal state. Values of the parameter of the leading character **31** at the time of normal state are values in which the mental power is "1", the terror is "0.15", the skill level is "1".

Regarding the values of respective parameters, the value of the parameter of the mental power changes between 0 to 1 (=weak to strong) depending on psychological condition of the leading character, the value of the parameter of the terror changes between 0 to 1 (=fearless to fearful) depending on the number of the enemy character or apparent fearfulness or so forth, and the value of the parameter of the skill level changes between 0 to 1 (less to much) depending on accumulation of experience of the battle between the leading character **31** and the enemy character **32** depending on the number of times of being conducted the game and so forth.

Next, the enemy character **32** breaks in on the leading character **31** at the predetermined respective places on the route of moving the leading character **31.** In STEP S3 of the flowchart indicated in FIG. 8, the control section **17** discriminates whether the enemy character **32** of breaking in on the leading character **31** emerges, in cases where the enemy character **32** does not emerge yet, operation of the control section **17** returns to the STEP S2, then the control section **17** controls to display the action of the leading character **31** on the basis of the parameter at the time of normal state. For that reason, the leading character **31** travels continuously on the predetermined route.

On the other hand, when the enemy character **32** emerges, the control section **17,** in STEP S4, reads out the parameter of the leading character **31** as the enemy character **32** emerges from the parameter storage section **14.**

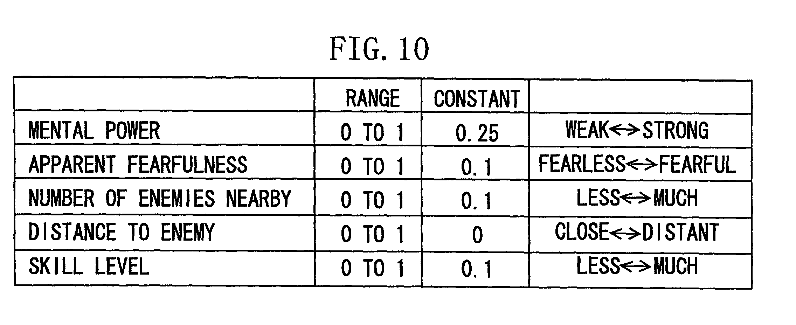

As for the parameter of the leading character **31** in cases where the enemy character **32** emerges, for instance, as illustrated in FIG. 10, respective parameters such as the parameter of the mental power of the leading character, the parameter of the apparent fearfulness against the enemy character **32,** the parameter of the number of the enemies who are hanging around, the parameter of distance of the enemy character **32** therebetween, the parameter of the skill level and so forth are read out from the parameter storage section **14.**

As understood from FIG. 10, the values of the respective parameters of the leading character **31** in cases where the enemy character **32** become values, in which, for instance, the value of the parameter of the mental power is "0.25", the value of the parameter of the apparent fearfulness of the enemy character **32** is "0.1", the value of the parameter of the number of enemies who are hanging around is "0.1", the value of the parameter of the distance of the enemy character **32** therebetween is "0", the value of the parameter of the skill level is "0.1".

Next, thus, when the leading character **31** comes across the enemy character **32,** the control section **17,** in STEP S5, discriminates whether the battle is made to conduct against the enemy character **32.** The discrimination whether the battle is made to conduct is performed on the basis of the respective parameters of the leading character **31** read out from the parameter storage section **14,** for instance, in cases where the value of the parameter of the terror is smaller than the predetermined value, the battle of the enemy character **32** therebetween is made to start, while in cases where the value of the parameter of the terror is larger than the predetermined value, the leading character **31** runs away from the enemy character **32.**

### Escape Action from Enemy Character

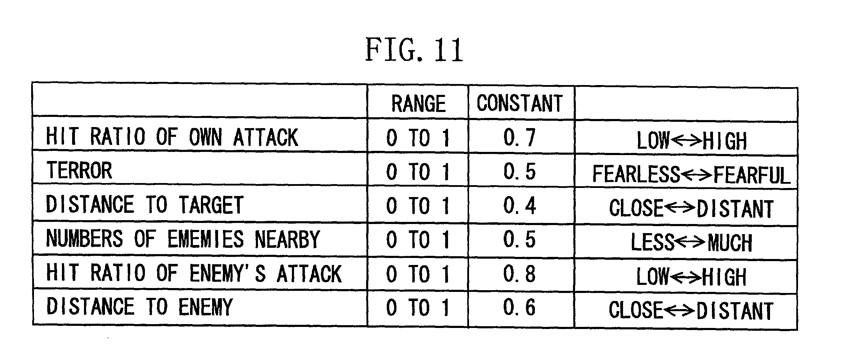

FIG. 11 illustrates one example of values of respective parameters on the occasion that the leading character **31** runs away from the enemy character **32** who came across. As understood from FIG. 11, when the leading character **31** runs away from the enemy character 32, the values of the respective parameters are one in which, for instance, hitting ratio of attack is "0.7", the terror is "0.5", distance to the target is "0.4", the number of enemies who are hanging around is "0.5", hit ratio of enemy's attack is "0.8", and the distance of the enemy therebetween is "0.6".

The control section **17,** in STEP S6, when the value of the parameter of the terror is more than "0.5", conducts display control in which the leading character **31** runs away from the enemy character **32.** The leading character **31** gets a long lead from the enemy character **32** in that the leading character **31** runs away from the enemy character **32,** with the result that the value of the parameter of the terror of the leading character **31** becomes less than "0.4", at this time, operation of the control section **17** returns to STEP S1, thus, the control section **17** controls to move the leading character **31** along the predetermined route under state of mind depending on the parameter at the time of normal state as described above to display.

### Battle against Enemy Character

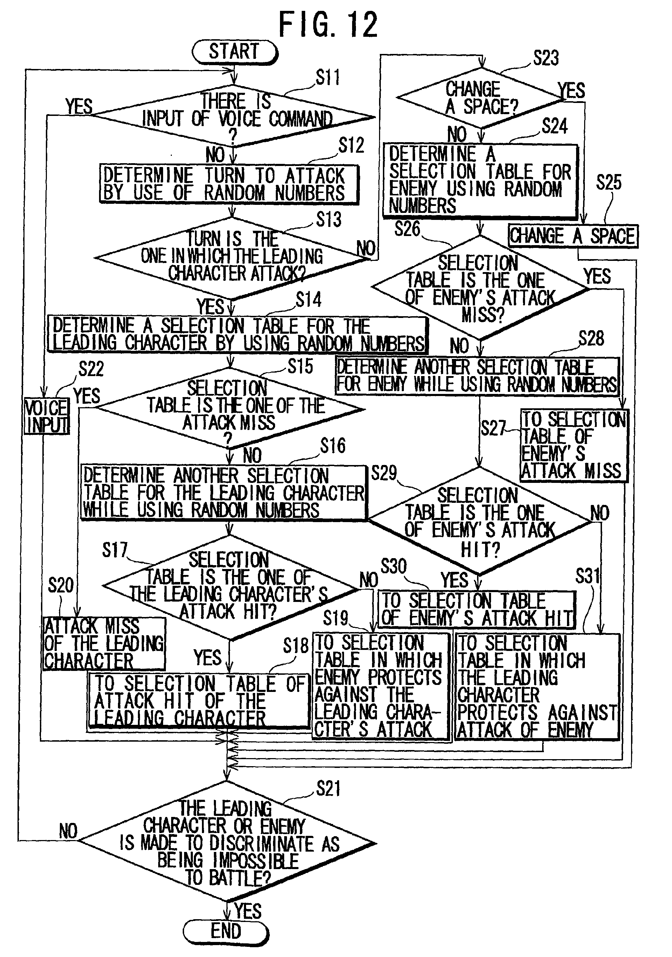

On the other hand, when the value of the parameter of the terror of the leading character **31** is smaller than the predetermined value, the control section **17** decides as opening of a battle at STEP S5 described above, followed by moving the operation to operation indicated in flowchart of FIG. 12 in order to cause the leading character **31** and the enemy character **32** to be battled.

Namely, in STEP S5 of the flowchart of FIG. 8, when the control section **17** discriminates as opening of a battle, the flowchart indicated in FIG. 12 starts, and operation of the control section **17** proceeds to STEP S11. In STEP S11, the control section **17** discriminates whether voice input is conducted from the player, when there is no voice input, operation proceeds to STEP S12, while when there is a voice input, in STEP S22, the control section controls to display so as to conduct a battle depending on the voice input. In addition, a battle action depending on the voice input will be described later.

Next, in STEP S12, the control section **17** determines whether a turn is one in which the leading character **31** conducts the attack or a turn is one in which the enemy character **32** conducts the attack while using random numbers to proceeds to STEP S13.

In STEP S13, the control section **17** discriminates whether the turn determined by use of the random numbers is one in which the leading character **31** conducts the attack or the turn determined by use of the random numbers is one in which the enemy character **32** conducts the attack, when the turn is one in which the leading character **31** conducts the attack, operation of the flow proceeds to STEP S14, while when the turn is one in which the enemy character **32** conducts the attack, operation of the flow proceeds to STEP S23.

### Attack Turn of the Leading character: STEP S14 to STEP S20

In STEP S14, since this turn is one in which the leading character **31** conducts the attack, the control section **17** determines a selection table corresponding to the attack of being conducted by the leading character **31** at this time while using random numbers, from among a plurality of tables formed in such a way as to classify the attack of the leading character **31** in every category, then the operation of the flow proceeds to STEP S15.

The case of this example, as for the selection table corresponding to the attack of being conducted by the leading character **31**, total three selection tables are provided such as "the selection table of attack miss (Attack MISS) of the leading character **31** (STEP S20)", "the selection table of attack hit (Attack HIT) of the leading character **31** (STEP S18)", and "the selection table in which the enemy character **32** protects against the attack of the leading character **31** (STEP S19)".

In STEP S15, the control section **17** discriminates whether the selection table determined by use the above random numbers is the selection table of the attack miss of the leading character **31**, when the selection table is not the selection table of the attack miss of the leading character **31**, the operation of the flow proceeds to STEP S16, while when the selection table is the selection table of the attack miss of the leading character **31**, the control section **17**, in STEP S20, controls to display the leading character **31** so as to execute any event of the selection table of the attack miss.

In STEP S15, when the operation of the flow proceeds to STEP S16 because the selection table is not the selection table of the attack miss of the leading character **31**, the control section **17** determines the selection table while using the random numbers again, thus the operation of the flow proceeds to STEP S17.

In STEP S17, the control section **17** discriminates whether the selection table determined by use of the random number again is the selection table of the attack hit of the leading character **31**, when the selection table is the selection table of the attack hit of the leading character **31**, the operation of the flow proceeds to STEP S18, then the control section **17** controls to display the leading character **31** so as to execute any event of the selection table of the attack hit, while when the selection table is not the selection table of the attack hit of the leading character **31**, the operation of the flow proceeds to STEP S19, then the control section **17** controls to display the leading character **31** so as to execute any event of the selection table in which the enemy character **32** protects against attack of the leading character.

### Attack Turn of Enemy Character: STEP S23 to STEP S31

On the other hand, in the above STEP S13, when discrimination is made that the turn is one in which the enemy character **32** conducts the attack, the control section **17** puts the operation of the flow to STEP S23. In STEP S23, the control section **17** discriminates whether discrimination result in STEP S13 changes a space between the leading character **31** and the enemy character **32**, when the discrimination result is one in which the space is made to change between the leading character **31** and the enemy character **32,** the control section **17,** in STEP S25, controls to display so as to change the space by predetermined amount between the leading character **31** and the enemy character **32**, while when the discrimination result is not one in which the space is made to change between the leading character **31** and the enemy character **32**, the operation of the flow proceeds to STEP S24.

In STEP S24, the control section **17** determines the selection table corresponding to the attack of being conducted by the enemy character **32** this time while using the random numbers, from among a plurality of selection tables formed in such a way as to classify the attack of the enemy character **32** in every category, then the operation of the flow proceeds to STEP S26.

The case of this example, as for the selection table corresponding to the attack of being conducted by the enemy character **32**, total three selection tables are provided such as "the selection table of attack miss (Attack NISS) of the enemy character **32** (STEP S27)", "the selection table of attack hit (Attack HIT) of the enemy character **32** (STEP S30)", and "the selection table in which the leading character **31** protects against the attack of the enemy character **32** (STEP S31)".

In STEP S26, the control section **17** discriminates whether the selection table determined by use the above random numbers is the selection table of the attack miss of the enemy character **32**, when the selection table is not the selection table of the attack miss of the enemy character **32**, the operation of the flow proceeds to STEP S28, while when the selection table is the selection table of the attack miss of the enemy character **32,** the control section **17,** in STEP S27, controls to display the enemy character **32** so as to execute any event of the selection table of the attack miss.

In STEP S26, when the operation of the flow proceeds to STEP S28 because the selection table is not the selection table of the attack miss of the enemy character **32**, the control section **17** determines the selection table while using the random numbers again, thus the operation of the flow proceeds to STEP S29.

In STEP S29, the control section **17** discriminates whether the selection table determined by use of the random number again is the selection table of the attack hit of the enemy character **32**, when the selection table is the selection table of the attack hit of the enemy character **32**, the operation of the flow proceeds to STEP S30, then the control section **17** controls to display the enemy character **32** so as to execute any event of the selection table of the attack hit, while when the selection table is not the selection table of the attack hit of the enemy character **32**, the operation of the flow proceeds to STEP S31, then the control section **17** controls to display the enemy character **32** so as to execute any event of the selection table in which the leading character **31** protects against attack of the enemy character **32.**

### Event Execution operation of the Leading character

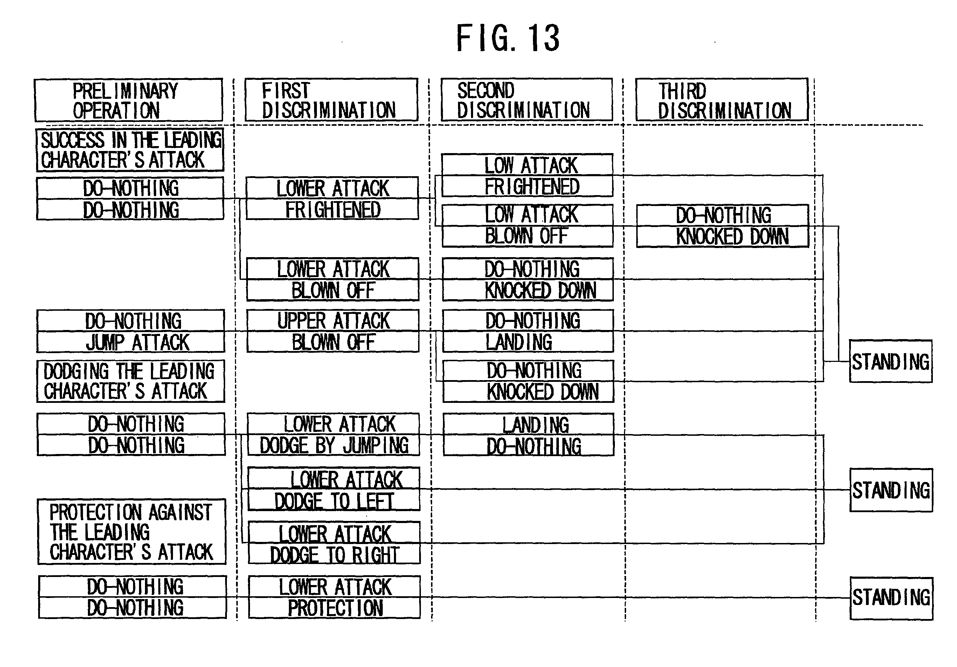

Here, FIG. 13 indicates events of "the selection table of the attack hit of the leading character **31** (success in the leading character's attack)" in STEP S18, events of "the selection table of the attack miss of the leading character **31** (dodging the leading character's attack)" in STEP S20, and events of "the selection table in which the enemy character **32** protects against the attack of the leading character **31** (protection against the leading character's attack)" in STEP S19.

This FIG. 13 displays the events of the leading character **31** and the events of the enemy character **32** while separating them into upper stand and lower stand respectively. For instance, letters of "do-nothing" as the events of preliminary operation of the selection table of success in leading character **31** attack are displayed above and below, in which the upper stand indicates event operations of "condition do-nothing" of the leading character **31**, and the lower stand indicates event operations of "condition do-nothing" of the enemy character **32**. Further, another event operations are the same as this example, namely, the upper stand indicates the event operations of the leading character **31** and the lower stand indicates the event operations of the enemy character **32**.

In addition, as understood from FIG. 13, in the case of this example, respective event operations are separated depending on the first to the third discrimination, thus the control section **17** controls to execute respective event operations of the leading character **31** and the enemy character **32** depending on the number of battles and so forth between the leading character **31** and the enemy character **32.**

### Event operation of Selection Table of Success in the leading character's attack

Specifically, in the condition that, for instance, previous operation (preliminary operation) of the leading character **31** and the enemy character **32** is one in which both do nothing each other (condition in which the leading character **31** and the enemy character **32** are opposed), when the selection table of "success in the leading character's attack" is selected on the basis of the random numbers as described above (aforementioned STEP S18), the control section **17** controls to display the leading character **31** so as to attack lower body of the enemy character **32** with gun and so forth.

The control section **17** controls to display the enemy character **32** so as to frighten the enemy character **32** in every time that the leading character **31** attacks the enemy character **32**, in the end, the control section **17** controls to display the enemy character **32** so that the enemy character **32** is blown off to be knocked down. Further, the control section **17** controls to display the leading character **31** so that the leading character **31** is in standing condition (condition of standing normally) after the enemy character **32** is knocked down.

On the contrary, in cases where, under the condition that preliminary operation is one in which the enemy character **32** conducts attack against the leading character **31**, the selection table of "success in the leading character's attack" is selected (above described STEP S18), the control section **17** controls to display the leading character **31** so as to attack upper body of the enemy character **32** with, for instance, gun and so forth.

In addition, the control section **17** controls to display the enemy character **32** so that the enemy character **32** is blown off, followed by landing, through being subjected to attack of the leading character **31**, further the enemy character **32** is knocked down caused by the fact that the enemy character **32** is subjected to the attack from the leading character **31.** And then, the control section **17** controls to display the leading character **31** so that the leading character **31** is in standing normally after the enemy character **32** is knocked down.

### Event operation of Selection Table of Dodging the Leading character's Attack

Next, in cases where, under the condition that preliminary operation of both the leading character **31** and the enemy character **32** is one in which both do nothing with each other, the selection table of "dodging the leading character's attack" is selected on the basis of the random numbers as described above (above described STEP S20), the control section **17** controls to display the leading character **31** so that the leading character **31** conducts the attack to lower body of the enemy character **32** with, for instance, a gun and so forth.

In addition, the control section **17** controls to display the enemy character **32** so that the enemy character **32** gives a jump in every time that the leading character **31** attacks the enemy character **32**, or the enemy character **32** moves from side to side so as to dodge the attack of the leading character **31.** And then, the control section **17** controls to display the both characters so that the leading character **31** and the enemy character **32** are in standing while coming face to face with each other after the enemy character **32** dodges the attack of the leading character **31.**

### Event operation of Selection Table of Protection against the Leading character's Attack

Next, in cases where, under the condition that preliminary operation of both the leading character **31** and the enemy character **32** is one in which both do nothing with each other, the selection table of "protection against the leading character's attack" is selected on the basis of the random numbers as described above (above described STEP S19), the control section **17** controls to display the leading character **31** so as to attack lower body of the enemy character **32** with, for instance, a gun and so forth, and the control section **17** controls to display the respective characters so that the enemy character **32** protects against the attack of the leading character **31.**

In addition, the control section **17** controls to display the respective characters so that the leading character **31** and the enemy character **32** are in standing while coming face to face with each other after the enemy character **32** protects against the attack of the leading character **31.**

### Event Execution Operation of Enemy Character

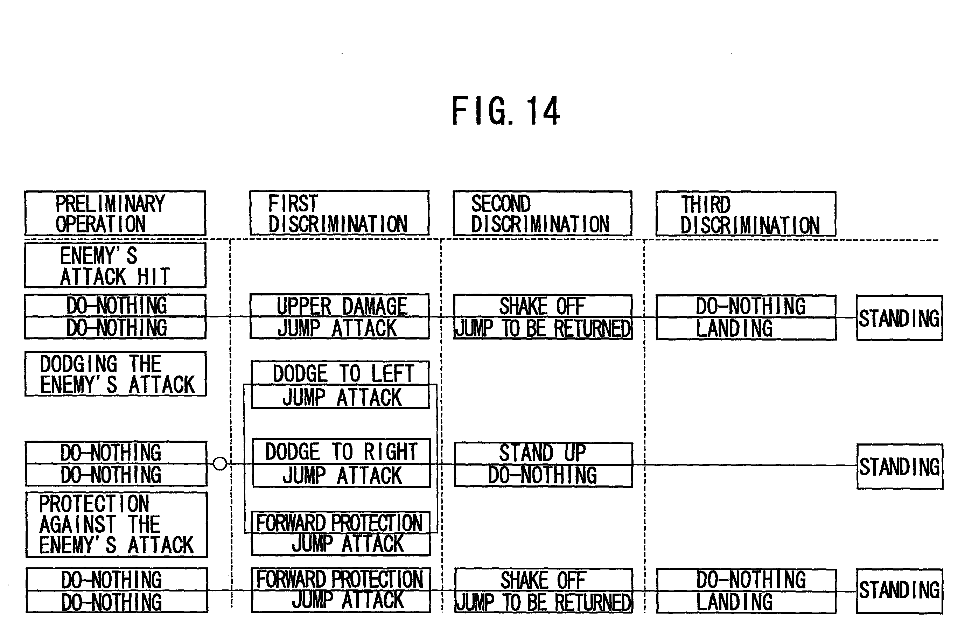

Next, FIG. 14 indicates events of "the selection table of the attack hit of the enemy character **32** (success in the enemy's attack)" in STEP S30, events of "the selection table of the attack miss of the enemy character **32** (dodging the enemy's attack)" in STEP S27, and events of "the selection table in which the leading character **31** protects against the attack of the enemy character **32** (protection against the enemy's attack)" in STEP S31.

In FIG. 14, event operations at upper stand indicate event operations of the leading character **31,** while event operations at power stand indicate event operations of the enemy character **32,** which are the same as the case of FIG. 13.

### Event operation of Selection Table of Success in Enemy character's Attack

In the condition that, for instance, preliminary operation of the leading character **31** and the enemy character **32** is one in which both do nothing each other, when the selection table of "enemy's attack HIT" is selected on the basis of the random numbers as described above (aforementioned STEP S30), the control section **17** controls to display the enemy character **32** so that it causes the enemy character **32** to give a jump to attack upper body of the leading character and the enemy character 32 gives a jump to land after the attack.

In addition, the control section **17** controls to display the leading character **31** so as to shake off the enemy character **32** who has conducted the attack, after the leading character is subjected to predetermined damage against the attack of the enemy character 32. And then, the control section **17** controls to display the respective characters so that the leading character and the enemy character **32** are in standing while coming face to face with each other after the enemy character **32** lands.

### Event Operation of Selection Table of Dodging the Enemy character's Attack

Next, in cases where, under the condition that preliminary operation of both the leading character **31** and the enemy character **32** is one in which both do nothing with each other, the selection table of "dodging the enemy's attack" is selected on the basis of the random numbers as described above (above described STEP S27), the control section **17** controls to display the enemy character **32** so as to attack the leading character **31** while allowing the enemy character **32** to give a jump, and the control section **17** controls to display the respective characters so that the leading character **31** is made to move to display from side to side or to display so as to make a dive frontward in order to dodge the attack of the enemy character **32.** And then, the control section **17** controls to display the respective characters so that the leading character **31** and the enemy character **32** are in standing while coming face to face with each other after the leading character **31** fends off the attack of the enemy character **32.**

### Event Operation of Selection Table of Protection against the Enemy Character's Attack

Next, in cases where, under the condition that preliminary operation of both the leading character **31** and the enemy character **32** is one in which both do nothing with each other, the selection table of "protection against the enemy's attack" is selected on the basis of the random numbers as described above (above described STEP S31), the control section **17** controls to display the enemy character **32** so as to attack the leading character **31** while allowing the enemy character **32** to give a jump, and the control section **17** controls to display the leading character **31** so as to swing to shake off the enemy character **32** who has conducted the attack. And then, the control section **17** controls to display the respective characters so that the leading character **31** and the enemy character **32** are in standing while coming face to face with each other after the enemy character **32** lands at the time that the leading character **31** shakes off the enemy character **32.**

### Another Event Operation

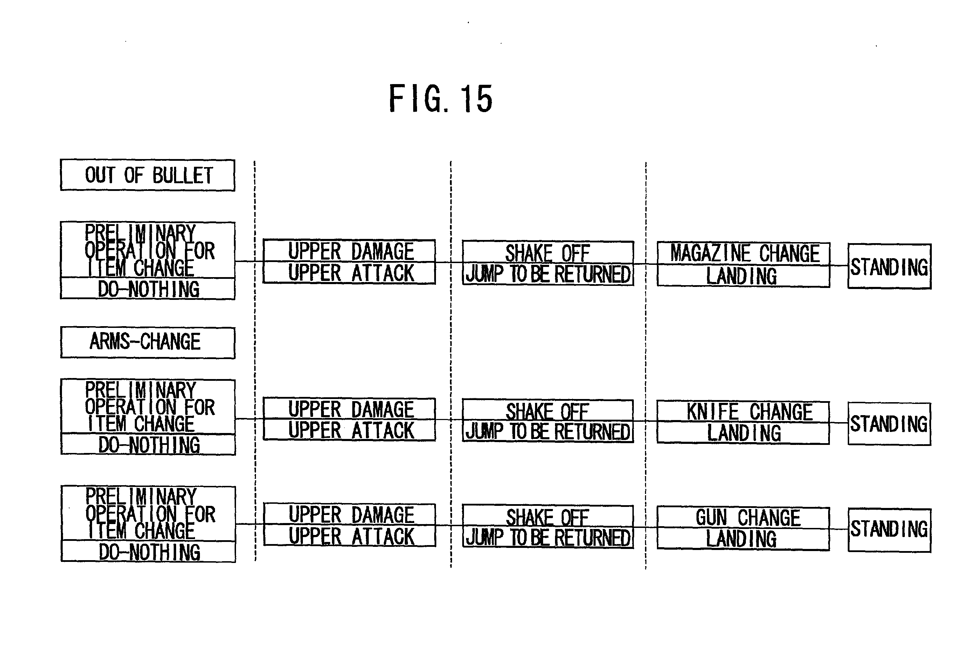

Next, FIG. 15 indicates an event operation of the case that a gun of being used by the leading character **31** is out of bullet and an event operation on the occasion that the leading character **31** changes arms to be used respectively.

### Event Operation of being out of Bullet

When a gun is used at the battle between the leading character **31** and the enemy character **32,** the number of bullet of being loaded decreases in every time the bullet is used. The control section **17** observes state of the arms **33** of being used by the leading character **31** on the basis of respective parameters as explained by using FIG. 7, when a gun which is used by the leading character **31** becomes out of bullet, the control section **17** executes an event of being out of bullet illustrated in FIG. 15.

Namely, the control section **17** controls to display the leading character **31** so as to change magazine of the gun when the parameter of the number of bullet of being loaded on the gun of being used by the leading character **31** became "0". In addition, the control section **17** controls to display the enemy character **32** so as to attack upper body of the leading character **31** during period of the time the leading character **31** changes magazine, and controls to display the leading character **31** so as to shake off the enemy character **32** who has conducted the attack. And then, the control section **17** controls to display the respective characters so that the leading character **31** and the enemy character **32** are in standing while coming face to face with each other after completion of magazine change.

### Event Operation of Arms Change

Next, in the case of this video game, the arms **33** of being used by the leading character **31** is capable of being changed at appropriate time. When the player instructs that the arms **33** of being used by the leading character **31** is made to change from, for instance, the gun to the knife, the control section **17** controls to display the leading character **31** so as to conduct action of changing the arms **33** from the gun to the knife as indicated in FIG. 15. In addition, the control section **17** controls to display the enemy character **32** so as to attack the upper body of the leading character **31** during period of the time the leading character **31** changes the arms, and controls to display the leading character **31** so as to shake off the enemy character **32** who has conducted the attack. And then, the control section **17** controls to display the respective characters so that the leading character **31** and the enemy character **32** are in standing while coming face to face with each other after changing the arms from the gun to the knife.

Similarly, When the player instructs that the arms **33** of being used by the leading character **31** is made to change from, for instance, the knife to the gun, the control section **17** controls to display the leading character **31** so as to conduct operation of changing the arms **33** from the knife to the gun. In addition, the control section **17** controls to display the enemy character **32** so as to attack the upper body of the leading character **31** during period of the time the leading character **31** changes the arms, and controls to display the leading character **31** so as to shake off the enemy character **32** who has conducted the attack. And then, the control section **17** controls to display the respective characters so that the leading character **31** and the enemy character **32** are in standing while coming face to face with each other after changing the arms from the knife to the gun.

Thus, the video game unit of the embodiment is one in which a plurality of selection tables made up of respective plural events are made to classify in every category, on the occasion that battle between the leading character **31** and the enemy character **32** is started, turn is determined whether the turn is one of being exercised by the leading character **31** or the turn is one of being exercised by the enemy character **32** on the basis of the random number, further, selection is made whether the selection table is one of the leading character **31** or the selection table is one of the enemy character **32** on the basis of the random numbers, in which the respective characters are made to control to be displayed so as to correspond to the events within the selection table to cause the both to be battled with each other. And then, the control section **17** executes selecting operation of such event repeatedly until either the leading character **31** or the enemy character **32** is made to discriminate as being impossibility in the battle in STEP S21 of the flowchart illustrated in FIG. 12. For that reason, since it is possible to conduct display control while fastening event operations of the leading character **31** and the enemy character **32** in real time, it is possible to enable the battle to be displayed continuously and smoothly.

### DISPLAY CONTROL OPERATION USING VOICE INPUT

### Change of Value of Parameter

Next, the video game unit of the embodiment is capable of manipulating the leading character **31** depending on a voice input from the player.

Namely, as described above, the leading character **31** and the enemy character **32** conduct the battle on the basis of respective events of the selection table, on this occasion, when a voice is vocalized by the player, the voice is gathered together by using the headset **3** illustrated in FIG. 1, and a voice signal corresponding to the voice is supplied to a voice recognition section **13** via a voice input section **12.** The voice recognition section **13** analyzes meaning of phrases of the voice vocalized by the player from waveform pattern of the voice signal, to supply the analyzed result to the control section **17.**

The control section **17,** in STEP S11 of the flowchart illustrated in FIG. 12, discriminates with or without of the voice input from the player, when there is no voice input, the operation of the flow proceeds to STEP S12 to conduct selection action of the above described selection table, while when there is the voice input, the operation of the flow proceeds to STEP S22, and the control section **17** controls to display the leading character so as to take action depending on the voice input from the player in preference to the event selected currently.

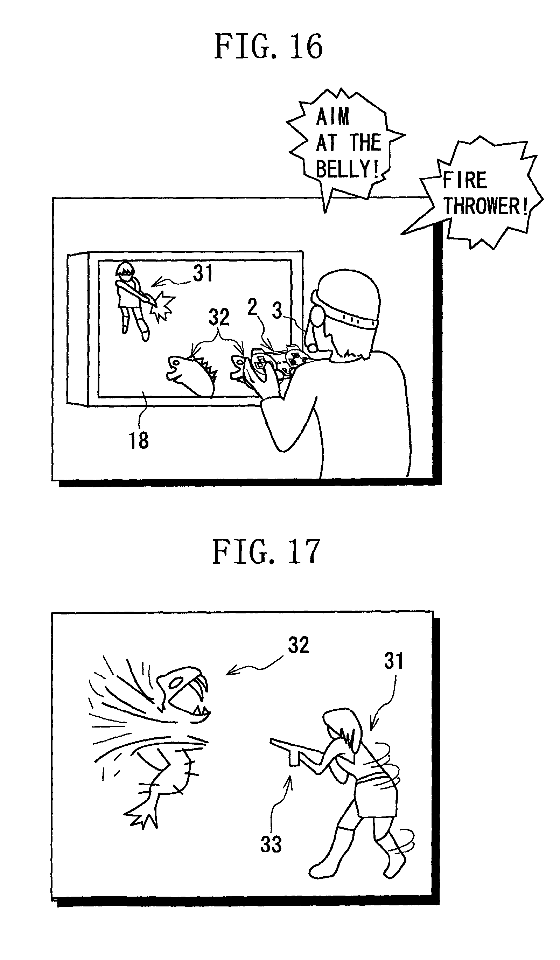

For instance, FIG. 16 illustrates a scene of being in battle between the leading character **31** and the enemy character **32,** in this example, the player gives instructions of "fire thrower!" for instructing the arms of attacking the enemy character **32** and of "Aim at the belly!" for instructing weak point of the enemy character **32** to the leading character **31** by using voices respectively.

When the voice input is made, the control section **17** controls to display the leading character **31** so as to beat back the enemy character **32** while allowing the fire thrower of being the arms **33** to be possessed to the leading character **31** as illustrated in FIG. 17, in order to circumfuse flame projection to the enemy character **32** by using this fire thrower.

In addition, in cases where the leading character **31** is weakened caused by the battle of the enemy character **32** therebetween, the player conducts the voice input of, for instance, "Keep your chin up!", whereby, the control section **17** controls to display the leading character **31** so as to improve the value of the parameter of the mental power of the leading character **31** and to decrease the value of the parameter of the damage counter so that the leading character **31** resumes.

### Change of value of Parameter depending on Volume of One's Voice

The voice recognition section **13** detects volume of the player's voice of this input voice as there is the voice input from the player to supply the voice-volume-information to the control section **17.** The control section **17** controls to display the leading character **31** on the basis of the value of the parameter varied depending on voice-volume while varying change-amount of value of the parameter of the leading character **31** depending on the voice-volume.

Specifically, in cases where the leading character **31** is weakened caused by the battle of the enemy character **32** therebetween, the player conducts the voice input of, for instance, "Keep your chin up!" with loud voice, whereby, the control section **17** changes greatly the value of the parameter in the direction in which the parameter of the "mental power" of the leading character **31** is improved and changes greatly the value of the parameter in the direction in which the parameter of the "damage counter" decreases. And then, the control section **17** controls to display the leading character **31** on the basis of greatly changed values of the respective parameters of the "mental power" and the "damage counter".

For that reason, the leading character **31** gets back one's strength quickly because the value of the parameter of the mental power is greatly improved and the value of the parameter of the damage greatly decreases, thus the leading character **31** can conduct actively the battle against the enemy character **32** again.

Similarly, in cases where the leading character **31** is weakened caused by the battle of the enemy character **32** therebetween, the player conducts the voice input of, for instance, "Keep your chin up!" with small voice, whereby, the control section **17** changes small the value of the parameter in the direction in which the parameter of the "mental power" of the leading character **31** is improved and changes small the value of the parameter in the direction in which the parameter of the "damage counter" decreases. And then, the control section **17** controls to display the leading character **31** on the basis of small changed values of the respective parameters of the "mental power" and the "damage counter".

For that reason, the leading character **31** gets back one's strength slowly because the value of the parameter of the mental power is small improved and the value of the parameter of the damage small decreases, thus the leading character **31** can conduct the battle against the enemy character **32** again with degree of small activity. In such a condition, since the leading character **31** is defeated by the enemy character **32,** the player encourages the leading character **31** while vocalizing, for instance "Keep your chin up!" with loud voice this time, thus allowing the leading character **31** to battle against the enemy character **32.**

### Manipulation of Action using another Voice Input

Next, the video game unit of the embodiment is capable of manipulating the leading character **31** by using another voice input with the exception of "Keep your chin up!". Foe instance, in cases where the enemy character **32** flings the leading character **31** at the time of being in battle between the leading character **31** and the enemy character **32,** the player conducts discrimination on the basis of environmental land feature of the leading character **31** and circumferences to conduct instruction of movement such as "Move leftward!", or "Move rightward!" or so forth by using the voice input. This voice input is analyzed by the voice recognition section **13** as described above, and the control section **17** moves to display the leading character **31** to leftward or moves to display the leading character **31** to rightward on the basis of analysis result. For that reason, the leading character **31** avoids the attack of the enemy character **32** in such a way as to move from side to side.

Only, when the leading character **31** can not follow voice instruction caused by physical condition such that there is a wall at the left side of the leading character **31** although the voice input of "Move leftward!" is made by the player, the control section **17** vocalizes voice output, such as for instance, "It is impossible to move leftward!" and so forth to control or the control section **17** controls to display the leading character **31** so as to act operation of indicating that the leading character **31** can not move leftward. For that reason, the player recognizes that the voice instruction of one's own is error, then the player conducts correct voice instruction.

In addition, as explained in STEP S6 of the flowchart illustrated in FIG. 8, in cases where the value of the parameter of the terror of the leading character **31** of being come across the enemy character **32** is more than "0.5", the control section **17** controls to display the leading character **31** so as to run away from the enemy character **32,** however, when the voice inputs such as "Keep your chin up!", or "Don't run away!" or so forth is made by the player as the leading character **31** ran away, the control section **17** changes the parameter value so as to reduce the parameter value of the terror of the leading character **31** corresponding to predetermined value. Then, when changed parameter value of the terror becomes not more than "0.4", the control section **17** controls to display the leading character **31** so as to stop from the enemy character **32** and to conduct the battle against the enemy character **32.** For that reason, as explained using the flowchart of FIG. 12, the battle between the leading character **31** and the enemy character **32** is conducted.

Only, when the terror is more than "0.5", even though there is the voice input from the player, the control section **17** conducts continuously display control in which the leading character **31** runs away. Accordingly, in this case, the leading character **31** runs away continuously from the enemy character **32** without listening to the player says. And then, when the leading character **31** gets away from the enemy character **32** with some degrees in such a way as to run away from the enemy character **32,** the control section **17** decreases the parameter value of the terror of the leading character **31** to control to display the leading character **31** so as to advance under the normal state of mind along the predetermined route.

### Voice Instruction except for the case of coming across the Enemy Character

The video game unit of the embodiment is always capable of conducting voice input in spite of the time of being in battle, for instance, the player gives instruction to the leading character **31** within the display screen, such as for instance, "Watch out!", "Head up", and so forth, in cases where the player who sees the scene in which the leading character **31** moves along the route has the foreboding that the enemy character **32** emerges suddenly. When such voice input is made, the control section **17** increases the parameter value of the terror of the leading character **31** up to the value corresponding to the predetermined value, and the control section **17** controls to display the action of the leading character **31** on the basis of the parameter value.

In this case, since the parameter value of the terror increases up to the value corresponding to the predetermined value, the control section **17** controls to display footfall of the leading character **31** of walking along the route normally until that time, so as to lapse into footfall of advancing along the route carefully while paying attention to surrounding area.

Further, when the enemy character **32** emerges as was the foreboding during the time of advancing along the route with careful footfall, the control section **17** controls to display the leading character **31** so as to run away from the enemy character **32** or so as to conduct the battle against the enemy character **32** on the basis of the respective parameter values of the leading character **31.**

While, when the player discriminates that circumstance is no danger in that the enemy character **32** does not emerge during the time the leading character **31** advances along the route with careful footfall, the player gives the voice instruction, such as for instance, "It is now out of danger. Go normally.". The control section **17** controls to display the leading character **31** so as to advance along the predetermined route with normal footfall in accordance with the voice input.

As is clear from the above described explanation, the video game unit of the embodiment classifies a plurality of selection table made up of respective plural events in every category, on the occasion that the battle between the leading character **31** and the enemy character **32** is stated, and determines whether the turn is one of being exercised by the leading character **31** or the turn is one of being exercised by the enemy character **32** on the basis of the random numbers, further selects selection table of either the leading character **31** or the enemy character **32** on the basis of the random numbers, thus controls to display respective characters so as to correspond to the event within the selection table to battle the both.

For that reason, since it is possible to conduct display control while fastening event operations of the leading character **31** and the enemy character **32** in real time, it is possible to permit continuous smooth battle display.

When there is the voice input from the player, contents (meaning of the words) of the voice input are made to analyze in order to change the parameter value of controlling to display the operation of the leading character **31** depending on the analysis result. And then, the operation of the leading character **31** based on the voice input is made to control to display in preference to the event operation of the leading character **31** at that time on the basis of the changed parameter value. For that reason, the leading character **31** is capable of being manipulated by using both of the controller and the voice input.

Since it is possible to manipulate the leading character **31** by using also voice input except for the controller, it is possible easy to conduct player's emotional involvement to the video game. For that reason, it is possible to let the player in on the game actively. In addition, it is possible to enhance sauce of the video game through pleasure of manipulating such character.

The control section **17** varies change-amount of the parameter value depending on voice-volume of the voice input, whereby, in some cases, it is not necessarily to reverse the action of the leading character **31** according to a way of the voice input. In such a case, the leading character **31** acts without listening to what the player says. Accordingly, the action of the character is not necessarily to become the action of following the voice input of the player. Also this point may be regarded as one of sauce of this video game.

In addition, in the explanation described above, in order to understand easily the embodiment of the present invention, the explanation is made in which the leading character **31** is made to manipulate by using voice input, however, it is also preferable to manipulate the enemy character **32** by using voice input. For instance, if one player manipulates the leading character **31** while the other player manipulates the enemy character **32,** it is possible to launch an offensive with each other while using the voice, thus the video game becomes one in which sauce is included.

Above described embodiment is one example in which the parameter value of the character is changed based on the player's voice input/recognition, however, the present invention is not limited to this example, and the parameter value can be changed by other means.

In addition, above described embodiment is one example in which the present invention is applied to the battle type video game, however, the present invention is capable of being applied to various kinds of video game such as, for instance, RPG (Roll Playing Game), AVG (Adventure Game), SLG (Simulation Game) and so forth except for the battle type video game.

Lastly, the embodiments described-above are only part of the examples of the present invention. For that reason, the present invention is not limited by the embodiments described above, and also if embodiments except for the aforementioned embodiments fall in the range without departing from the scope of technical consciousness according to the present invention, various kinds of modifications and changes are possible depending on design and so forth.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An object display method comprising the steps of:
selecting any one of selection table from among a plurality of selection tables of having a plurality of event information that indicate operations of an object;
selecting any one of event information from among the event information of the selection table selected at the step of the selecting the selection table; and
controlling to display the object so as to conduct operations corresponding to the event information selected at the step of selecting the event information.

2. The object display method according to claim 1, further comprising the step of:
controlling to display the object so as to conduct operations of fastening to be configured respective event information through executing repeatedly the step of selecting the selection table and the step of selecting the event information.

3. The object display method according to claim 1 or 2, further comprising the step of:
conducting at least one of both selection of the selection table and selection of the event information by use of random numbers.

4. The object display method according to claim 1, 2, or 3, further comprising the step of:
controlling to display the object so as to conduct operations corresponding to the event information on the basis of the parameter concerning the object.

5. The object display method according to claim 4, further comprising the steps of:
recognizing a voice; and
controlling to display the object on the basis of changed parameter, after changing the parameter depending on the voice recognized at the voice recognition step.

6. The object display method according to claim 5, further comprising the step of:
varying change-amount of the parameter depending on voice-volume of the voice recognized at the voice recognition step.

7. The object display method according to claim 5 or 6, further comprising the step of:
a step for controlling to display the object so as to conduct operations corresponding to the voice recognized at the voice recognition step on the occasion that the voice is recognized at the voice recognition step in preference to the selected event information.

8. The object display method according to claim 1, 2, 3, 4, 5, 6, or 7, wherein the plurality of selection tables have a plurality of event information that indicate battle operations of plurality of game characters.

9. An object display program to be executed on a computer, comprising:
a step for selecting any one of selection table from a plurality of selection tables of having a plurality of event information that indicate operations of an object;
a step for selecting any one of event information from the event information of the selection table selected at the selection step of the selection table; and
a step for controlling to display the object so as to conduct operations corresponding to the event information selected at the selection step of the event information.

10. A computer-readable recording medium having recorded therein an object display program to be executed on a computer, the object display program comprising:
a step for selecting any one of selection table from among a plurality of selection tables of having a plurality of event information that indicate operations of an object;
a step for selecting any one of event information from among the event information of the selection table selected at the selection step of the selection table; and
a step for controlling to display the object so as to conduct operations corresponding to the event information selected at the selection step of the event information.

11. The computer-readable recording medium having recorded therein an object display program according to claim 10, the object display program further comprising:
a step for controlling to display the object so as to conduct operations of fastening to be configured respective event information through executing repeatedly the selection step of the selection table and the selection step of the event information.

12. The computer-readable recording medium having recorded therein the object display program according to claim 10 or 11, the object display program further comprising:
a step for conducting at least one of both selection of the selection table and selection of the event information by use of random numbers.

13. The computer-readable recording medium having recorded therein the object display program according to claim 10, 11, or 12, the object display program further comprising:
a step for controlling to display the object so as to conduct operations corresponding to the event information on the basis of the parameter concerning the object.

14. The computer-readable recording medium having recorded therein an object display program according to claim 13, the object display program further comprising:
a step for recognizing a voice; and
a step for controlling to display the object on the basis of changed parameter, after changing the parameter depending on the voice recognized at the voice recognition step.

15. The computer-readable recording medium having recorded therein the object display program according to claim 14, the object display program further comprising:
a step for varying change-amount of the parameter depending on voice-volume of the voice recognized at the voice recognition step.

16. The computer-readable recording medium having recorded therein the object display program according to claim 14 or 15, the object display program further comprising:
a step for controlling to display the object so as to conduct operations corresponding to the voice recognized at the voice recognition step on the occasion that the voice is recognized at the voice recognition step in preference to the selected event information.

17. The computer-readable recording medium having recorded therein the object display program according to claim 10, 11, 12, 13, 14, 15, or 16, wherein the plurality of selection tables have a plurality of event information that indicate battle operations of plurality of game characters.

18. A program execution apparatus for executing an object display program, the object display program, comprising:
a step for selecting any one of selection table from among a plurality of selection tables of having a plurality of event information that indicate operations of an object;
a step for selecting any one of event information from among the event information of the selection table selected at the selection step of the selection table; and
a step for controlling to display the object so as to conduct operations corresponding to the event information selected at the selection step of the event information.

19. The program execution apparatus for executing the object display program according to claim 18, the object display program, further comprising:
a step for controlling to display the object so as to conduct operations of fastening to be configured respective event information through executing repeatedly the selection step of the selection table and the selection step of the event information.

20. The program execution apparatus for executing the object display program according to claim 18 or 19, the object display program, further comprising:
a step for conducting at least one of both selection of the selection table and selection of the event information by use of random numbers.

21. The program execution apparatus for executing the object display program according to claim 18, 19, or 20, the object display program, further comprising:
a step for controlling to display the object so as to conduct operations corresponding to the event information on the basis of the parameter concerning the object.

22. The program execution apparatus for executing the object display program according to claim 21, the object display program, further comprising:
a step for recognizing a voice; and
a step for controlling to display the object on the basis of changed parameter, after changing the parameter depending on the voice recognized at the voice recognition step.

23. The program execution apparatus for executing the object display program according to claim 21, the object display program, further comprising:
a step for varying change-amount of the parameter depending on voice-volume of the voice recognized at the voice recognition step.

24. The program execution apparatus for executing the object display program according to claim 22 or 23, the object display program, further comprising:
a step for controlling to display the object so as to conduct operations corresponding to the voice recognized at the voice recognition step on the occasion that the voice is recognized at the voice recognition step in preference to the selected event information.

25. The program execution apparatus for executing the object display program according to claim 18, 19, 20, 21, 22, 23, or 24, wherein the plurality of selection tables have a plurality of event information that indicate battle operations of plurality of game characters.
